(19) Europäisches Patentamt / European Patent Office / Office européen des brevets

(11) **EP 2 386 616 A1**

(12) **EUROPEAN PATENT APPLICATION**
published in accordance with Art. 153(4) EPC

(43) Date of publication:
**16.11.2011 Bulletin 2011/46**

(21) Application number: **09837539.7**

(22) Date of filing: **30.11.2009**

(51) Int Cl.:
*C09J 133/04* (2006.01)  *C09J 7/02* (2006.01)
*C09J 11/06* (2006.01)  *C09J 175/04* (2006.01)
*G02B 5/30* (2006.01)  *G02F 1/1335* (2006.01)

(86) International application number:
**PCT/JP2009/070099**

(87) International publication number:
**WO 2010/079653 (15.07.2010 Gazette 2010/28)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **09.01.2009 JP 2009003168**

(71) Applicant: **Soken Chemical & Engineering Co., Ltd.**
**Toshima-ku**
**Tokyo 171-8531 (JP)**

(72) Inventors:
• **TOMITA Koji**
  **Sayama-shi**
  **Saitama 350-1320 (JP)**
• **YONEKAWA Yuya**
  **Sayama-shi**
  **Saitama 350-1320 (JP)**

(74) Representative: **Michalski Hüttermann & Partner**
**Patentanwälte**
**Neuer Zollhof 2**
**40221 Düsseldorf (DE)**

(54) **PRESSURE-SENSITIVE ADHESIVE COMPOSITION FOR POLARIZER AND POLARIZER FORMED USING SAME**

(57) An object is to provide a pressure-sensitive adhesive composition for a polarizer that is excellent in durability and simultaneously is excellent in prevention of leakage of light, without the use of a high-energy light ray. The pressure-sensitive adhesive composition for a polarizer contains components (A) to (C) and having a gel fraction of 91% or more. (A) 100 parts by weight of an acrylic polymer that is obtained by copolymerizing at least the following monomer components (a1) to (a3), and has a weight average molecular weight of 500,000 to 2,000,000 and a ratio (Mw/Mn) of the weight average molecular weight (Mw) to a number average molecular weight (Mn) of 8 or less: (a1) 45 to 94.9% by mass of an alkyl (meth)acrylate ester monomer, (a2) 0.1 to 5% by mass of a carboxyl group-containing monomer, and (a3) 5 to 50% by mass of a benzene ring-containing monomer; (B) 4 to 12 parts by weight of a tolylene diisocyanate crosslinking agent; and (C) 0.05 to 1 part by weight of a silane coupling agent that has reactivity with a carboxyl group, wherein the benzene ring-containing monomer of the monomer component (a3) is 5 times or more in terms of mole of the tolylene diisocyanate crosslinking agent of the component (B).

EP 2 386 616 A1

**Description**

Technical Field

The present invention relates to a pressure-sensitive adhesive composition for a polarizer, and more specifically, relates to a pressure-sensitive adhesive composition for a polarizer, which has both excellent durability and effective prevention of leakage of light, without the use of a high-energy light ray, and to a polarizer formed using the same.

Background Art

A liquid crystal device has a structure containing a liquid crystal material wedged between two substrates, and a polarizer is adhered on the surface of the substrates through a pressure-sensitive adhesive layer. In recent years, a liquid crystal device is being widely spread to such purposes as an in-vehicle equipment, an outdoor measuring instrument, a display for a personal computer, and a television, and associated therewith, the usage environment is becoming severe.

Under the severe usage environment, the pressure-sensitive adhesive used for a polarizer may suffer foaming, peeling, cracking and the like in some cases. Further, with increasing size of display, there is a problem that the pressure-sensitive adhesive fails to follow the dimensional change of the polarizer, leading to leakage of light which results in deterioration of the display quality.

In order to solve these problems, the applicant has proposed a pressure-sensitive adhesive composition that contains an acrylic polymer formed by copolymerizing an aromatic ring-containing monomer, a functional group-containing monomer and the like, an isocyanate crosslinking agent, and a silane coupling agent, in which the weight average molecular weight of the acrylic polymer and the ratio of the weight average molecular weight and the number average molecular weight are adjusted to prescribed ranges (Patent Document 1). Furthermore, pressure-sensitive adhesive compositions with enhanced durability due to its refractive index controlled by using a solid tackifier having a particular refractive index have been proposed (Patent Documents 2 and 3).

It has been said that leakage of light can be prevented by increasing gel fraction of the pressure-sensitive adhesive composition used. Use of a crosslinking agent is known to increase the gel fraction of the pressure-sensitive adhesive composition by crosslinking the polymer constituting the pressure-sensitive adhesive composition.

There have been some measures that are known for crosslinking a polymer constituting a pressure-sensitive adhesive composition with a crosslinking agent. One of them is a method of using a high-energy light ray, such as UV light. Specifically, Patent Document 4 discloses a pressure-sensitive adhesive that achieves a high gel fraction by using UV light, thereby preventing leakage of light. In the case where UV light is used for crosslinking, however, there are concerns about adverse effects of the UV light on the materials constituting the adhesive sheet, and it is necessary, for example, to make sufficient consideration on selecting materials of a separator or the like adhered to the surface of the pressure-sensitive adhesive. Further, the pressure-sensitive adhesive obtained by the method of Patent Document 4 is hardly sufficient in terms of durability, as shown in Examples later.

On the other hand, a method of crosslinking without a high-energy light ray, such as UV light, has been known, in which a polymer constituting a pressure-sensitive adhesive composition and a crosslinking agent are simply mixed and allowed to stand for crosslinking (which may be hereinafter referred to as "an aging crosslinking method"), and examples thereof include Patent Document 5.

In Patent Document 5 using the aging crosslinking method, however, the upper limit of the gel fraction is set at 90% although higher gel fraction is needed for preventing leakage of light as described above. This is because, as described in the paragraph [0043] of the patent document, an increased gel fraction lowers the relaxation property and the adhesiveness, thereby deteriorating the durability. In this context, the document discloses the examples where a substance having a positive intrinsic birefringence is mixed as a component for preventing leakage of light into the pressure-sensitive adhesive composition, which means that the pressure-sensitive adhesive composition of Patent Document 5 may substantially not achieve a sufficient capability of preventing leakage of light by itself, and requires a component for preventing leakage of light upon practical use.

Related Art Documents

Patent Documents

Patent Document 1:    JP-A-2007-138056
Patent Document 2:    JP-A-2006-342258
Patent Document 3:    JP-A-2007-84762

Patent Document 4:     JP-A-2008-31214
Patent Document 5:     JP-A-2008-144125

Summary of the Invention

Problems to be Solved by the Invention

Accordingly, an object of the present invention is to provide a pressure-sensitive adhesive composition for a polarizer that is excellent in durability and prevention of leakage of light.

Means for Solving the Problems

The present inventors have assiduously conducted investigations for solving the problems and, as a result, have found that a phenomenon of leakage of light is avoided by adding a tolylene diisocyanate (TDI) crosslinking agent and a silane coupling agent having reactivity with a carboxyl group to an acrylic polymer formed by copolymerizing an alkyl (meth)acrylate ester, a carboxyl group-containing monomer and a benzene ring-containing monomer.

Furthermore, it has been found that: the acrylic polymer comprising a carboxyl group-containing polymer crosslinked with a large amount of a TDI crosslinking agent forms an amide binding with -COOH and -NCO, which increases the elasticity at the molecular level, thereby enhancing the durability; the acrylic polymer copolymerized with the benzene ring monomer enhances the compatibility with the TDI isocyanate, which prevents a coated film from suffering white turbidity, and when applied to a polarizing film containing a particular amount of water, it makes the water in the polarizing film transfer to the pressure-sensitive adhesive layer to react with the isocyanate, thereby enhancing the durability of the resulting polyurethane. Thus, the present invention has been completed.

Specifically, the present invention relates to a pressure-sensitive adhesive composition for a polarizer, comprising components (A) to (C) and having a gel fraction of 91% or more:

(A) 100 parts by weight of an acrylic polymer that is obtained by copolymerizing at least the following monomer components (a1), (a2) and (a3), and has a weight average molecular weight of 500,000 to 2,000,000 and a ratio (Mw/Mn) of the weight average molecular weight (Mw) to a number average molecular weight (Mn) of 8 or less:

(a1) 45 to 94.9% by mass of an alkyl (meth) acrylate ester monomer,
(a2) 0.1 to 5% by mass of a carboxyl group-containing monomer, and
(a3) 5 to 50% by mass of a benzene ring-containing monomer;

(B) 4 to 12 parts by weight of a tolylene diisocyanate crosslinking agent; and
(C) 0.05 to 1 part by weight of a silane coupling agent that has reactivity with a carboxyl group,

wherein the benzene ring-containing monomer of the monomer component (a3) is 5 times or more in terms of mole of the tolylene diisocyanate crosslinking agent of the component (B).

The present invention also relates to a polarizer comprising a pressure-sensitive adhesive layer formed of the pressure-sensitive adhesive composition for a polarizer, provided on at least one surface of a polarizing film.

Advantages of the Invention

The pressure-sensitive adhesive composition for a polarizer of the present invention, when used as a pressure-sensitive adhesive for a polarizing film or the like, effectively prevents leakage of light. The composition provides a hard coated film with a high gel fraction, but the coated film has excellent durability and is prevented from suffering peeling or the like even under high temperature and high humidity conditions, by using the particular amounts of the functional group of the polymer and the crosslinking agent. Furthermore, the coated film is prevented from suffering white turbidity.

Embodiment for carrying out the Invention

The acrylic polymer for use as the component (A) in the pressure-sensitive adhesive composition for a polarizer of the present invention is obtained by copolymerizing at least the alkyl (meth)acrylate ester as the monomer component (a1), the carboxyl group-containing monomer as the monomer component (a2) and the benzene ring-containing monomer as the monomer component (a3).

The alkyl (meth)acrylate ester as the monomer component (a1) is not particularly limited, but preferably has an alkyl group having 1 to 12 carbon atoms, which may be branched. The specific examples include methyl (meth)acrylate, ethyl (meth)acrylate, propyl (meth)acrylate, isopropyl (meth)acrylate, butyl (meth)acrylate, isobutyl (meth)acrylate, pentyl (meth)acrylate, hexyl (meth)acrylate, 2-ethylhexyl (meth)acrylate, octyl (meth)acrylate, nonyl (meth)acrylate, decyl (meth)acrylate, dodecyl (meth)acrylate and lauryl (meth)acrylate. Among them, methyl acrylate, ethyl acrylate and butyl acrylate are particularly preferred since a high molecular weight may be easily obtained, and the durability may be enhanced.

Examples of the carboxyl group-containing monomer as the monomer component (a2) include (meth) acrylic acid, 2-carboxyethyl (meth)acrylate, 3-carboxypropyl (meth)acrylate, 4-carboxybutyl (meth)acrylate, itaconic acid, crotonic acid, maleic acid, fumaric acid and maleic anhydride.

The benzene ring-containing monomer as the monomer component (a3) provides a function of improving the compatibility between the acrylic polymer as the component (A) obtained by copolymerizing the same and the TDI crosslinking agent as the component (B). Specific examples of the benzene ring-containing monomer include phenyl acrylate, phenoxyethyl (meth)acrylate, benzyl (meth) acrylate, phenoxydiethylene glycol (meth) acrylate, ethylene oxide-modified nonylphenol (meth)acrylate, hydroxyethylated β-naphthol acrylate, biphenyl (meth)acrylate, styrene, vinyltoluene and α-methylstyrene. Among them, phenoxyethyl acrylate and benzyl acrylate are preferably used since they have good copolymerizability and are excellent in transparency upon forming into a coated film.

The contents of the monomer component (a1) and the monomer component (a2) in the component (A) are from 45 to 94.9% by mass, and preferably from 50 to 85% by mass, for the monomer component (a1), and from 0.1 to 5% by mass, and preferably from 1 to 3% by mass, for the monomer component (a2).

The benzene ring-containing monomer as the monomer component (a3) for use in the present invention need to be contained in an amount 5 times or more in terms of mole the TDI crosslinking agent as the component (B). This may be expressed by the molar ratio of the monomer component (a3) and the TDI isocyanate. When the ratio is less than 5 times, the isocyanate crosslinking agent described later and the polymer are not compatible, which may cause white turbidity of the coated film. The content of the monomer component (a3) in the component (A) is from 5 to 50% by mass, and preferably from 12 to 49% by mass.

In the preparation of the acrylic polymer as the component (A), a monomer capable of being copolymerized may be contained in addition to the monomer components (a1) to (a3). The examples include an alkoxy (meth)acrylate ester, a hydroxyl group-containing monomer, an amino group-containing monomer and an amide-containing monomer.

Examples of the alkoxy (meth)acrylate ester include 2-methoxyethyl (meth)acrylate, 2-ethoxyethyl (meth)acrylate, 2-methoxypropyl (meth)acrylate, 3-methoxypropyl (meth)acrylate, 2-methoxybutyl (meth)acrylate and 4-methoxybutyl (meth)acrylate.

Examples of the hydroxyl group-containing monomer include 2-hydroxyethyl (meth)acrylate, 4-hydroxybutyl (meth)acrylate, 2-hydroxypropyl (meth)acrylate, 2-hydroxybutyl (meth)acrylate, 6-hydoxyhexyl (meth)acrylate, 1,4-cyclohexanedimethanol mono(meth)acrylate, chloro-2-hydroxypropyl acrylate, diethylene glycol mono(meth)acrylate and allyl alcohol.

Examples of the amino group-containing monomer include dimethylaminoethyl (meth)acrylate and diethylaminoethyl (meth)acrylate.

Examples of the amide-containing monomer include (meth)acrylamide and N-methylol(meth)acrylamide.

Within the copolymerizable monomers, a monomer that has reactivity with the TDI crosslinking agent is preferably contained in an amount of 2% by mass or less, and more preferably 1% by mass or less, in the total monomers, since the monomer may impair the reaction between the carboxyl group-containing monomer and the TDI crosslinking agent and the reaction between the TDI crosslinking agent and water.

The component (A) of the present invention may be produced by polymerizing monomers including the monomer components (a1) to (a3) and the like with a known polymerization method, such as the solution polymerization method, the bulk polymerization method, the emulsion polymerization method and the suspension polymerization method. The component (A) is preferably produced by the solution polymerization method or the bulk polymerization method, which do not contain a polymerization stabilizer, such as an emulsifier or a suspending agent.

The component (A) thus obtained has a weight average molecular weight of 500,000 to 2,000,000, and preferably 800,000 to 1,500,000. When the weight average molecular weight is less than 500, 000, foaming and peeling are liable to occur in heat and wet conditions, and when it is larger than 2, 000, 000, the viscosity is increased to deteriorate the workability. The weight average molecular weight referred to in the specification means a value that is obtained by the measurement method described in Examples.

The TDI crosslinking agent as the component (B) for use in the present invention forms a large amount of amide bindings through reaction with the carboxyl group of the acrylic polymer as the component (A), whereby the elasticity is increased at the molecular level, the momentary stress upon contraction of the polarizer is relaxed, and the peeling phenomenon is prevented from occurring. Examples of the TDI crosslinking agent include tolylene diisocyanate and a tolylene diisocyanate derivative. For controlling the crosslinking degree, an epoxy crosslinking agent, a metal chelate crosslinking agent, an aziridine compound and the like may be used in combination.

The amount of the component (B) mixed in the pressure-sensitive adhesive composition for a polarizer of the present invention is from 4 to 12 parts by weight (which may be hereinafter referred simply to "parts"), and preferably from 6 to 10 parts, per 100 parts of the component (A). When the amount is less than 4 parts, peeling may occur under heat and wet environments, and when it is larger than 12 parts, the composition may be whitened upon coating, and the viscosity thereof may be increased to deteriorate the workability.

Since the isocyanate group of the TDI crosslinking agent and the carboxyl group of the acrylic polymer as the component (A) react with each other relatively slowly, water transferred from the polarizing film to the pressure-sensitive adhesive composition reacts with the isocyanate group in parallel with the reaction between the isocyanate group and the carboxyl group, thereby forming polyurethane. According to the mechanism, polyurethane is formed in the highly crosslinked acrylic polymer, and thus the durability is further enhanced.

The silane coupling agent as the component (C) for use in the present invention is one that has a group capable of reacting with the carboxyl group contained in the acrylic polymer as the component (A). The use of the same facilitates firm adhesion of the pressure-sensitive adhesive to glass, thereby preventing peeling under heat and wet environments. Specific examples of the silane coupling agent as the component (C) include an epoxy-containing silane coupling agent, such as 3-glycidoxypropyltrimethoxysilane, 3-glycidoxypropyltriethoxysilane, 3-glycidoxypropylmethyldiethoxysilane and 2-(3,4-epoxycyclohexyl)ethyltrimethoxysilane, and an amino group-containing silane coupling agent, such as 3-aminopropyltrimethoxysilane and N-(2-aminoethyl)-3-aminopropyltrimethoxysilane.

The amount of the component (C) mixed in the pressure-sensitive adhesive for a polarizer of the present invention is from 0.05 to 1 part, and preferably from 0.1 to 0.5 part, per 100 parts of the component (A). When the amount is less than 0.05 part, peeling may occur under heat and wet environments, and when it is larger than 1 part, the silane coupling agent may bleed under high temperature environments, which also accelerates peeling.

The pressure-sensitive adhesive composition for a polarizer of the present invention preferably has a gel fraction of 91% or more. This facilitates control of the distortion of the polarizing film, as well as being effective for the processing suitability and prevention of dents. When the gel fraction is less than 91%, leakage of light occurs over a large area, and luminance of the light leakage is increased.

The pressure-sensitive adhesive composition for a polarizer of the present invention may be prepared by blending the components (A), (B) and (C) and an arbitrary component where necessary, and mixing them according to an ordinary method. Examples of the arbitrary component include an antioxidant, an ultraviolet ray absorbent, a plasticizer and an antistatic agent, which may be mixed in a ratio that does not impair the advantages of the invention.

The pressure-sensitive adhesive sheet for a polarizer of the present invention may be produced from the pressure-sensitive adhesive composition as obtained above, by applying the pressure-sensitive adhesive composition to at least one surface of a support with an ordinary method, and then drying and crosslinking the coated layer to form a pressure-sensitive adhesive layer. As the support, a polyester film having been subjected to release treatment on the surface thereof may be used. The thickness of the pressure-sensitive adhesive layer is generally approximately from 10 to 30 $\mu$m, and preferably approximately from 15 to 25 $\mu$m.

The polarizer of the present invention may be obtained by forming the pressure-sensitive adhesive layer formed of the pressure-sensitive adhesive composition, on at least one surface of a polarizing film. The thickness of the pressure-sensitive adhesive layer formed on the polarizing film is generally approximately from 10 to 30 $\mu$m, and preferably approximately from 15 to 25 $\mu$m.

The preferred method for forming the pressure-sensitive adhesive layer on the polarizing film in the present invention include one where the pressure-sensitive adhesive composition is applied to the polarizing film that has a water content of 0.5 to 5% by mass, and dried and aged, or alternatively, a coated film on a support is dried, and then adhered to the polarizing film and aged, thereby forming the pressure-sensitive adhesive layer. By crosslinking the pressure-sensitive adhesive on the polarizing film that has a particular water content, the water in the polarizing film is transferred to the pressure-sensitive adhesive layer simultaneously with drying and aging, and polyurethane is formed through reaction between isocyanate and water. When the water content is less than 0.5% by mass, it may be difficult to form polyurethane, and when it exceeds 5% by mass, the crosslinking reaction may be impaired.

The polarizing film for use in the present invention may comprise a layer having another function, and specific examples thereof include an elliptically polarizing film and a phase retardation film. Among them, a polarizing film or an elliptically polarizing film further contributes to the stress relaxation property of the pressure-sensitive adhesive composition for a polarizer of the invention.

The type of the liquid crystal device, in which the polarizer of the present invention thus obtained is used, is not particularly limited, and may be any one of a TN mode, a VA mode, an IPS mode, an OCB mode and the like. Among them, the polarizer of the invention is preferably applied to a TN mode liquid crystal device since the light leakage preventing property of the polarizer of the invention is further exhibited.

Example

The present invention will be described in more detail with reference to the following Examples. However, the invention should not be whatsoever restricted at all by these Examples.

Production Examples 1 to 10

Copolymerizable monomers, a polymerization initiator and a solvent (s) in an amount in terms of part by weight shown in Table 1 were placed in a reactor equipped with a stirrer, a reflux condenser, a thermometer and a nitrogen introduction tube, and the air in the reactor was replaced by nitrogen gas. Subsequently, the mixture was heated to 68°C under stirring in a nitrogen atmosphere, and then azobisisobutyronitrile (AIBN) was added thereto. The mixture was reacted for 8 hours. After completing the reaction, an acrylic polymer solution was obtained.

A weight average molecular weight (Mw) and a ratio (Mw/Mn) of the weight average molecular weight (Mw) to a number average molecular weight (Mn) of the acrylic polymers obtained in Production Examples 1 to 10 were measured according to the following GPC measurement conditions. The resulting values are shown in Table 1.

GPC Measurement Conditions

Measuring Device: HLC-8120GPC (produced by Tosoh Corporation) GPC column constitution: following 5 columns in series (all produced by Tosoh Corporation)

(1) TSK-GEL HXL-H (guard column)
(2) TSK-GEL G7000HXL
(3) TSK-GEL GMHXL
(4) TSK-GEL GMHXL
(5) TSK-GEL G2500HXL

Sample concentration: dilution with tetrahydrofuran to make 1.0 mg/cm$^3$
Mobile phase solvent: tetrahydrofuran
Flow rate: 1 mL/min
Column temperature: 40°C
[Table 1]

| | | BA | PHA | BzA | AA | 2HEA | EtAc | To | AIBN | Weight average molecular weight (Mw) | Mw/Mn |
|---|---|---|---|---|---|---|---|---|---|---|---|
| Production Example 1 | acrylic polymer (1) | 83 | 15 | - | 2 | - | 100 | 50 | 0.1 | 55 | 4.5 |
| Production Example 2 | acrylic polymer (2) | 83 | 15 | - | 2 | - | 100 | - | 0.05 | 160 | 4.8 |
| Production Example 3 | acrylic polymer (3) | 82.5 | 15 | - | 2 | 0.5 | 100 | - | 0.05 | 160 | 4.3 |
| Production Example 4 | acrylic polymer (4) | 53 | 45 | - | 2 | - | 100 | - | 0.05 | 160 | 4.5 |
| Production Example 5 | acrylic polymer (5) | 78 | - | 20 | 2 | - | 100 | - | 0.05 | 160 | 5.2 |
| Production Example 6 | acrylic polymer (6) | 98 | - | - | 2 | - | 100 | - | 0.05 | 160 | 4.6 |

(continued)

|  |  | BA | PHA | BzA | AA | 2HEA | EtAc | To | AIBN | Weight average molecular weight (Mw) | Mw/Mn |
|---|---|---|---|---|---|---|---|---|---|---|---|
| Production Example 7 | acrylic polymer (7) | 93 | 5 | - | 2 | - | 100 | - | 0.05 | 160 | 4.5 |
| Production Example 8 | acrylic polymer (8) | 83 | 15 | - | 2 | - | 100 | 60 | 0.1 | 45 | 4.8 |
| Production Example 9 | acrylic polymer (9) | 82 | 15 | - | - | 3 | 100 | - | 0.05 | 160 | 5 |
| Production Example 10 | acrylic polymer (10) | 83 | 15 | - | 2 | - | 100 | - | 0.05 | 160 | 8.9 |
| The symbols in the table are as follows. BA: butyl acrylate PHA: phenoxyethyl acrylate BzA: benzyl acrylate AA: acrylic acid 2HEA: 2-hydroxyethyl acrylate EtAc: ethyl acetate (solvent) To: toluene (solvent) AIBN: azobisisobutyronitrile (polymerization initiator) | | | | | | | | | | | |

Example 1

Production of Polarizer

Preparation of Pressure-sensitive Adhesive Composition

Per 100 parts of the acrylic polymer (solid content) of the acrylic polymer solution obtained in Production Example 1, 8 parts of CORONATE L (produced by Nippon Polyurethane Industry Co., Ltd.) as a TDI curing agent, 0.25 part of TETRAD-X (produced by Mitsubishi Gas Chemical Company, Inc.) as an epoxy curing agent and 0.2 part of KBM-403 (produced by Shin-Etsu Chemical Co., Ltd.) as a silane coupling agent were added thereto, and they were sufficiently mixed, thereby providing a pressure-sensitive adhesive composition. The resulting composition was designated as Product 1.

Production of Polarizer

The resulting pressure-sensitive adhesive composition was applied to a surface of a polyester film having been subjected to release treatment, and dried, thereby providing a pressure-sensitive adhesive sheet having a pressure-sensitive adhesive layer 20 $\mu$m thick. The pressure-sensitive adhesive sheet was adhered to one surface of a polarizing film having a water content of 2%, and aged under conditions of a temperature of 23°C and a humidity of 50%RH for 7 days, thereby providing a polarizer.

Products 2 to 8 and Comparative Products 1 to 8

Pressure-sensitive adhesive compositions were obtained in the same manner as in Example 1 except that the acrylic polymer and the pressure-sensitive adhesion imparting resin were changed as shown in Table 2 below. The resulting products were designated as Products 2 to 8 and Comparative Products 1 to 8 respectively. Polarizers were produced in the same manner as in Example 1 using the resulting pressure-sensitive adhesive compositions.

Comparative Product 9 (Example 1 of JP-A-2008-31214)

Copolymerizable monomers containing butylene acrylate (BA)/2-hydroxyethyl acrylate (2HEA)/acrylic acid (AA) = 98/1.5/0.5 in terms of part by weight and 90 parts of ethyl acetate (EtAc) were placedd in a reactor equipped with a stirrer, a reflux condenser, a thermometer and a nitrogen introduction tube, and the air in the reactor was replaced by nitrogen gas. Subsequently, the mixture was heated to 68°C under stirring in a nitrogen atmosphere, and then 0.05 part of azobisisobutyronitrile (AIBN) was added thereto. The mixture was reacted under a nitrogen gas stream for 8 hours. After completing the reaction, an acrylic polymer solution was obtained.

Per 100 parts of the acrylic polymer (solid content) of the acrylic polymer solution obtained above, 15 parts of ARONIX M-134 (produced by Toagosei Co., Ltd.) as a polyfunctional acrylic monomer, 1.5 parts of IRGACURE 500 (produced by Ciba Specialty Chemicals, Inc.) as a photopolymerization initiator, 4 parts of CORONATE L (produced by Nippon Polyurethane Industry Co., Ltd.) as a TDI polyisocyanate compound and 0.1 part of KBM-403 (produced by Shin-Etsu Chemical Co., Ltd.) as a silane coupling agent were added thereto, and they were sufficiently mixed, thereby providing a pressure-sensitive adhesive composition. The resulting composition was designated as Comparative Product 9.

The resulting pressure-sensitive adhesive composition was applied to a surface of a polyester having been subjected to release treatment, and dried, thereby providing a pressure-sensitive adhesive sheet having a pressure-sensitive adhesive layer 20 $\mu$m thick. The pressure-sensitive adhesive sheet was adhered to one surface of a polarizing film, in which a discotic liquid crystal was oriented. After lapsing 30 minutes from the adhesion, the film was irradiated with an ultraviolet (UV) ray from the side of the releasing sheet by using an electrodeless lamp, H-bulb, produced by Fusion UV Systems, Inc., under conditions of an illuminance of 600 mW/cm$^2$ and a light amount of 150 mJ/cm$^2$. Thereafter, the layer was aged under conditions of a temperature of 23°C and a humidity of 50%RH for 7 days, thereby providing a polarizer.

Comparative Product 10 (Example 8 of JP-A-2008-144125)

Copolymerizable monomers containing butyl acrylate (BA)/benzyl acrylate (BzA)/acrylic acid (AA) = 100/0.5/2 in terms of part by weight and 239 parts of ethyl acetate (EtAc) were placed in a reactor equipped with a stirrer, a reflux condenser, a thermometer and a nitrogen introduction tube, and the air in the reactor was replaced by nitrogen gas. Subsequently, the mixture was heated to 60°C under stirring in a nitrogen atmosphere, and then 0.3 part of azobisisobutyronitrile (AIBN) was added thereto. The mixture was reacted under a nitrogen gas stream for 4 hours. After completing the reaction, an acrylic polymer solution was obtained. The resulting solution was designated as Comparative Product 10.

Per 100 parts of the acrylic polymer (solid content) of the acrylic polymer solution obtained above, 5 parts of CORONATE L (produced by Nippon Polyurethane Industry Co., Ltd.) as a TDI curing agent, 1.3 parts of ALCH-TR (produced by Kawaken Fine Chemicals Co., Ltd.) as an aluminum chelate compound and 0.1 part of KBM-403 (produced by Shin-Etsu Chemical Co., Ltd.) as a silane coupling agent were added thereto, and they were sufficiently mixed, thereby providing a pressure-sensitive adhesive composition. A polarizer was produced in the same manner as in Example 1.

Comparative Product 11 (Example 11 of JP-A-2008-144125)

Copolymerizable monomers containing butyl acrylate (BA)/benzyl acrylate (BzA)/acrylic acid (AA) = 100/20/2 in terms of part by weight and 285 parts of ethyl acetate (EtAc) were placed in a reactor equipped with a stirrer, a reflux condenser, a thermometer and a nitrogen introduction tube, and the air in the reactor was replaced by nitrogen gas. Subsequently, the mixture was heated to 60°C under stirring in a nitrogen atmosphere, and then 0.3 part of azobisisobutyronitrile (AIBN) was added thereto. The mixture was reacted under a nitrogen gas stream for 4 hours. After completing the reaction, an acrylic polymer solution was obtained. The resulting solution was designated as Comparative Product 11.

Per 100 parts of the acrylic polymer (solid content) of the acrylic polymer solution obtained above, 2 parts of CORONATE L (produced by Nippon Polyurethane Industry Co., Ltd.) as a TDI curing agent and 0.1 part of KBM-403 (produced by Shin-Etsu Chemical Co., Ltd.) as a silane coupling agent were added thereto, and they were sufficiently mixed, thereby providing a pressure-sensitive adhesive composition. A polarizer was produced in the same manner as in Example 1.

Test Example 1

The polarizers produced with Products 1 to 6 and Comparative Products 1 to 8 obtained above were evaluated for the gel fraction, the ratio of benzene ring-containing monomer/TDI crosslinking agent, the durability, the prevention of leakage of light and the condition of the coated film, in the following evaluation methods. The polarizers produced with Comparative Products 9 to 11 were similarly evaluated for the durability, the prevention of leakage of light and the condition of the coated film. The results are shown in Table 2.

Evaluation Method for Gel Fraction

The resulting pressure-sensitive adhesive composition was applied to a surface of a polyester having been subjected to release treatment so as to be 20 $\mu$m thick after drying. Then the composition was dried, and a polyester film having been subjected to release treatment was adhered to the other surface, followed by aging at 23°C and 50%RH for 7 days, thereby providing a test piece. Approximately 0.1 g of the pressure-sensitive adhesive was collected from the test piece into a sample bottle, to which 30 cc of ethyl acetate was added, and the sample bottle was shaken for 24 hours. The content of the sample bottle was filtered using a stainless steel mesh of 200 mesh, and the residue on the mesh was dried at 100°C for 2 hours. The dry weight of the residue was measured, and the gel fraction was calculated according to the following equation.

```
gel fraction (%) = ((dry weight) / (weight of collected
pressure-sensitive adhesive)) × 100
```

Evaluation Method for Ratio of Benzene Ring-containing Monomer/TDI Crosslinking Agent

The ratio was obtained according to the following equation.

```
ratio of benzene ring-containing monomer/crosslinking agent
(%) = (Bc / BM) / (Ic / IM)
```

wherein $B_c$ represents the content of the benzene ring-containing monomer (% by mass), $B_M$ represents the molecular weight of the benzene ring-containing monomer, $I_c$ represents the content of the TDI crosslinking agent (% by mass), and $I_M$ represents the molecular weight of the TDI crosslinking agent.

Evaluation Method for Durability

The polarizer cut into a piece of 150 mm × 250 mm was adhered to one surface of a glass plate with a roll laminator, and maintained in an autoclave controlled to 50°C and 5 atm for 20 minutes, thereby preparing a test plate. The two same test plates were prepared and were allowed to stand under conditions of a temperature of 60°C and a humidity of 90%RH for 500 hours and conditions of a temperature of 80°C for 500 hours, respectively, and occurrence of peeling and the like were visually evaluated according to the following standard.

Standard

A: No appearance defect, such as peeling
B: Slight appearance defect, such as peeling
C: Notable appearance defect, such as peeling

Evaluation Method for Prevention of Leakage of Light

Two polarizers were adhered to both surfaces of a 19-inch wide TN monitor (model No.: BenQ FP93VW) with a roll laminator to form crossed nicols, and maintained in an autoclave at 50°C and 5 atm for 20 minutes, thereby preparing a test plate. The test plate was allowed to stand under conditions of 70°C for 500 hours, and leakage of light was visually evaluated according to the following standard.

Standard

A: No leakage of light
B: Slight leakage of light
C: Notable leakage of light

Evaluation Method for Coated Film

The resulting pressure-sensitive adhesive composition was applied to a surface of a polyester film having been subjected to release treatment so as to be 20 μm thick after drying. Then the composition was dried, and a polyester film was adhered to the other surface, followed by aging at 23°C and 50%RH for 7 days, thereby providing a test piece. The state of the coated film of the test piece after aging was visually evaluated.

Evaluation Method for Water Content of Polarizing Film

The polarizing film cut into a piece of 10 cm × 10 cm is allowed to stand under conditions of 23°C and 65%RH for 24 hours, and the weight thereof was measured (which was designated as the weight before heating). Subsequently, the polarizing film was heated at 120°C for 1 hour, and the weight thereof was measured (which was designated as the weight after heating). The water content of the polarizing film was obtained according to the following equation.

```
water content (%) = (((weight before heating) - (weight after
heating)) / (weight before heating)) × 100
```

[Table 2]

| | | CORONATE L | TETRAD-X | KBM-403 | Gel fraction | Benzene ring containing-monomer/TDI | 80°C | 60°C/90% | Leakage of light | Coated film |
|---|---|---|---|---|---|---|---|---|---|---|
| Product 1 | acrylic polymer (1) 100 | 8 | 0.25 | 0.2 | 94 | 6.4 | A | A | A | transparent |
| Product 2 | acrylic polymer (2) 100 | 8 | 0.15 | 0.2 | 96 | 6.4 | A | A | A | transparent |
| Product 3 | acrylic polymer (2) 100 | 4 | 0.15 | 0.2 | 91 | 12.8 | A | A | A | transparent |
| Product 4 | acrylic polymer (3) 100 | 8 | 0.1 | 0.2 | 95 | 6.4 | A | A | A | transparent |
| Product 5 | acrylic polymer (4) 100 | 8 | 0.15 | 0.2 | 97 | 19.2 | A | A | A | transparent |
| Product 6 | acrylic polymer (5) 100 | 8 | 0.15 | 0.2 | 96 | 10.1 | A | A | A | transparent |
| Comparative Product 1 | acrylic polymer (2) 100 | 2 | 0.15 | 0.2 | 86 | 26 | A | A | B | transparent |
| Comparative Product 2 | acrylic polymer (2) 100 | – | 1 | 0.2 | 96 | – | slightly peeled | peeled | B | transparent |
| Comparative Product 3 | acrylic polymer (6) 100 | 2 | 0.15 | 0.2 | 84 | 0 | A | A | C | transparent |
| Comparative Product 4 | acrylic polymer (6) 100 | 8 | 0.15 | 0.2 | 95 | 0 | A | A | B | white turbid |
| Comparative Product 5 | acrylic polymer (7) 100 | 8 | 0.15 | 0.2 | 95 | 2.1 | A | A | A | white turbid |
| Comparative Product 6 | acrylic polymer (8) 100 | 8 | 0.25 | 0.2 | 94 | 6.4 | slightly peeled | slightly peeled | A | transparent |
| Comparative Product 7 | acrylic polymer (9) 100 | 2 | – | 0.2 | 95 | 26 | slightly peeled | peeled | B | transparent |
| Comparative Product 8 | acrylic polymer (10) 100 | 8 | 0.15 | 0.2[*1] | 93 | 6.4 | slightly peeled | slightly peeled | B | transparent |
| Comparative Product 9[*2] | | | | | | | A | slightly peeled | A | transparent |
| Comparative Product 10[*3] | | | | | | | A | A | C | transparent |
| Comparative Product 11[*4] | | | | | | | A | A | C | transparent |

The symbols in the table are as follows.
CORONATE L: TDI isocyanate curing agent
TETRAD-X: epoxy curing agent
KBM-403: epoxy-functional silane

*1: KBE-9007, isocyanate-functional silane
*2: JP-A-2008-31214, Example 1
*3: JP-A-2008-144125, Example 8
*4: JP-A-2008-144125, Example 11

The evaluation results of Table 2 clearly demonstrate that the polarizers using the pressure-sensitive adhesive compositions of the present invention were excellent in the adhesiveness and the prevention of leakage of light, were excellent in the durability without peeling or the like, and formed a transparent coated film. On the other hand, the polarizers of Comparative Products 1 to 8 developed defects in any of the durability, the prevention of leakage of light and the white turbidity of the coated film. On the polarizer using the pressure-sensitive adhesive composition obtained in Example 1 of JP-A-2008-31214 (Comparative Product 9), peeling or the like occurred, which means defects in the durability. The polarizers using the pressure-sensitive adhesive compositions obtained in Examples 8 and 11 of JP-A-2008-144125 (Comparative Products 10 and 11) developed defects in the prevention of leakage of light.

Evaluation of Water Content of Polarizing Film

Polarizers were produced in the same manner as above except that the polarizing film having a water content of 2% in Product 2 was changed to polarizing films having a water content of 0.2% (Comparative Product 12) and 6.5% (Comparative Product 13). The products were evaluated for the gel fraction, the ratio of benzene ring-containing monomer/TDI crosslinking agent, the durability, the prevention of leakage of light and the condition of the coated film, in the same manner as above. The results are shown in Table 3.

[Table 3]

| | | CORONATE L | TETRAD-X | KBM-403 | Gel fraction | Benzene ring containing-monomer/TDI | 80°C | 60°C/90% | Leakage of light | Coated film |
|---|---|---|---|---|---|---|---|---|---|---|
| Product 2 | acrylic polymer (2) | 8 | 0.15 | 0.2 | 96 | 6.4 | A | A | A | transparent |
| Comparative Product 12 | acrylic polymer (2) | 8 | 0.15 | 0.2 | 85 | 6.4 | A | peeled | C | transparent |
| Comparative Product 13 | acrylic polymer (2) | 8 | 0.15 | 0.2 | 72 | 6.4 | foaming | A | C | transparent |
| Product 2: water content of polarizing film: 2% <br> Comparative Product 12: water content of polarizing film: 0.2% <br> Comparative Product 13: water content of polarizing film: 6.5% | | | | | | | | | | |

The evaluation results of Table 3 clearly demonstrate that when the water content of the polarizing film was changed to 0.2% (Comparative Product 12) and 6.5% (Comparative Product 13), the gel fraction dropped, peeling and foaming occurred, and defects were found in the prevention of leakage of light.

Industrial Applicability

The pressure-sensitive adhesive composition of the present invention effectively prevents leakage of light, has excellent durability, and prevents occurrence of peeling or the like even under high temperature and high humidity conditions. Accordingly, it can be favorably applied to a pressure-sensitive adhesive composition for a polarizer.

**Claims**

1. A pressure-sensitive adhesive composition for a polarizer, comprising components (A) to (C) and having a gel fraction of 91% or more:

   (A) 100 parts by weight of an acrylic polymer that is obtained by copolymerizing at least the following monomer components (a1) to (a3), and has a weight average molecular weight of 500, 000 to 2, 000, 000 and a ratio (Mw/Mn) of the weight average molecular weight (Mw) to a number average molecular weight (Mn) of 8 or less:

      (a1) 45 to 94.9% by mass of an alkyl (meth)acrylate ester monomer,
      (a2) 0.1 to 5% by mass of a carboxyl group-containing monomer, and
      (a3) 5 to 50% by mass of a benzene ring-containing monomer;

      (B) 4 to 12 parts by weight of a tolylene diisocyanate crosslinking agent; and
      (C) 0. 05 to 1 part by weight of a silane coupling agent that has reactivity with a carboxyl group,

   wherein the benzene ring-containing monomer of the monomer component (a3) is 5 times or more in terms of mole of the tolylene diisocyanate crosslinking agent of the component (B).

2. A pressure-sensitive adhesive sheet for a polarizer, comprising a pressure-sensitive adhesive layer formed of the pressure-sensitive adhesive composition for a polarizer according to claim 1, which is formed on at least one surface of a support.

3. A polarizer comprising a pressure-sensitive adhesive layer formed of the pressure-sensitive adhesive composition for a polarizer according to claim 1, which is formed on at least one surface of a polarizing film.

4. The polarizer according to claim 3, wherein the polarizing film contains water, and the water content is from 0.5 to 5% by mass.

**INTERNATIONAL SEARCH REPORT**

International application No.

PCT/JP2009/070099

A. CLASSIFICATION OF SUBJECT MATTER
*C09J133/04*(2006.01)i, *C09J7/02*(2006.01)i, *C09J11/06*(2006.01)i, *C09J175/04*
(2006.01)i, *G02B5/30*(2006.01)i, *G02F1/1335*(2006.01)i

According to International Patent Classification (IPC) or to both national classification and IPC

B. FIELDS SEARCHED

Minimum documentation searched (classification system followed by classification symbols)
C09J133/04, C09J7/02, C09J11/06, C09J175/04, G02B5/30, G02F1/1335

Documentation searched other than minimum documentation to the extent that such documents are included in the fields searched
| Jitsuyo Shinan Koho | 1922–1996 | Jitsuyo Shinan Toroku Koho | 1996–2010 |
| Kokai Jitsuyo Shinan Koho | 1971–2010 | Toroku Jitsuyo Shinan Koho | 1994–2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2008-31214 A (Lintec Corp.), 14 February 2008 (14.02.2008), the entire specification (Family: none) | 1-4 |
| A | JP 2008-144125 A (Fujifilm Corp.), 26 June 2008 (26.06.2008), the entire specification (Family: none) | 1-4 |
| A | JP 2008-144126 A (Fujifilm Corp.), 26 June 2008 (26.06.2008), the entire specification (Family: none) | 1-4 |

☒ Further documents are listed in the continuation of Box C.  ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 15 February, 2010 (15.02.10) | 02 March, 2010 (02.03.10) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| International application No. |
|---|
| PCT/JP2009/070099 |

C (Continuation).   DOCUMENTS CONSIDERED TO BE RELEVANT

| Category* | Citation of document, with indication, where appropriate, of the relevant passages | Relevant to claim No. |
|---|---|---|
| E,A | JP 2009-299047 A  (Saiden Chemical Industry Co., Ltd.), <br> 24 December 2009 (24.12.2009), <br> the entire specification <br> (Family: none) | 1-4 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007138056 A
- JP 2006342258 A
- JP 2007084762 A

- JP 2008031214 A
- JP 2008144125 A